# EUROPÄISCHE PATENTANMELDUNG

(11) **EP 4 717 599 A1**
(43) Veröffentlichungstag der Anmeldung: **01.04.2026**
(21) Anmeldenummer: 25205895.3
(22) Anmeldetag: 30.09.2025
(51) Int. Cl.: B64D 15/12, F01D 25/02, F02C 7/047

(54) **ELEKTRISCHES ANTI-VEREISUNGSSYSTEM**

(30) Priorität: 30.09.2024 DE 102024128180
(71) Anmelder: MTU Aero Engines AG, 80995 München (DE)
(72) Erfinder: Mengen, Julia, 80995 München (DE)

(57) **Zusammenfassung**

Die Erfindung betrifft ein elektrisches Anti-Vereisungssystem (10) für verstellbare Leitschaufeln (2b, 2c), insbesondere Verstellleitklappen (2c) eines Verdichtereinlassgitters (2d), in einem Flugtriebwerk, umfassend einen Innenring (20a) und/oder ein Außengehäuse (20b) zur Lagerung der verstellbaren Leitschaufeln, wobei der Innenring (20a) und/oder das Außengehäuse (20b) eine Vielzahl von Aufnahmen (22) für jeweils einen Schaufelzapfen einer der Leitschaufeln aufweist, wobei in Axialrichtung (Ax) hinter zumindest einer, vorzugsweise einiger, besonders bevorzugt aller, der Aufnahmen (22) ein im Wesentlichen konusförmiger Schwenkbereich (24) auf einer Oberfläche (26) des Innenrings (20a) und/oder des Außengehäuses (20b) angeordnet ist. Um eine Vereisung zumindest im Bereich des Fahnenspalts sicher zu verhindern, wird vorgeschlagen, dass in dem Schwenkbereich (24) zumindest eine Heizschicht (32) an oder unter der Oberfläche des Innenrings (20a) und/oder des Außengehäuses (20b) angeordnet ist.

## Beschreibung

Die Erfindung betrifft ein elektrisches Anti-Vereisungssystem für verstellbare Leitschaufeln in einem Flugtriebwerk gemäß dem Oberbegriff das Anspruchs 1.

Die Enteisung von Leitschaufeln kann direkt an der Schaufeloberfläche durch ein elektrisches Anti-Vereisungssystem (engl.: "Anti-Icing System", AIS) erfolgen, wie beispielsweise in EP3690199A1 vorgeschlagen. Dabei werden jedoch im Gegensatz zu einer Beheizung durch Heißluft nur die Flächen enteist, die direkt mit einem Heizelement versehen sind. Daher ist es nachteilig möglich, dass eine Enteisung der Fahnenspalte allein durch die Wärmeeinflusszone um die Heizelemente auf Druck- und Saugseite nicht sichergestellt werden kann. Ein Aufbringen der Heizelemente auf der Ober- und Unterseite der Leitschaufeln ist wegen der Applikation/Herstellung der Heizelemente sowie der Dimensionen der Leitschaufeln schwierig. Zudem muss ein Kontakt zwischen den elektrischen Heizelementen und metallischen Oberflächen wegen der Gefahr eines Kurzschlusses sicher vermieden werden, was bei einer direkten Beheizung der Leitschaufel in den entsprechenden Bereichen schwierig ist.

Es ist eine Aufgabe der Erfindung ein elektrisches Anti-Vereisungssystem anzugeben, das eine Vereisung zumindest im Bereich des Fahnenspalts sicher verhindert.

Die Aufgabe wird erfindungsgemäß von einem elektrischen Anti-Vereisungssystem gemäß Anspruch 1 gelöst.

Ein erfindungsgemäßes elektrisches Anti-Vereisungssystem für verstellbare Leitschaufeln in einem Flugtriebwerk umfasst einen Innenring und/oder ein Außengehäuse zur Lagerung der verstellbaren Leitschaufeln, wobei der Innenring und/oder das Außengehäuse eine Vielzahl von Aufnahmen für jeweils einen Schaufelzapfen einer der Leitschaufeln aufweist, wobei in Axialrichtung jeweils ein in Strömungsrichtung hinter den Aufnahmen, bevorzugt im Wesentlichen konusförmiger, Schwenkbereich auf einer Oberfläche des Innenrings und/oder des Außengehäuses angeordnet ist. Die Aufgabe wird von dem elektrischen Anti-Vereisungssystem dadurch gelöst, dass zumindest in dem Schwenkbereich eine Heizschicht unter der Oberfläche des Innenrings und/oder des Außengehäuses angeordnet ist.

Die Heizschicht heizt erfindungsgemäß die Oberfläche zumindest in dem Schwenkbereich und verhindert so vorteilhaft eine Vereisung des Fahnenspalts.Ein Eisaufbau von der Strömungskanalwand zu der Verstellleitschaufel wird somit vorteilhaft verhindert.

Da eine elektrische Enteisung eine hohe Energiemenge benötigt, ist eine Reduzierung der zu enteisenden Fläche vorteilhaft. Daher wird anstelle einer vollständigen Enteisung der Außengehäuse- und/oder der Innenringbereiche nur ein Teil des oder genau der Schwenkbereich enteist.

Die Heizschicht kann auch andere Teile der Oberfläche des Innenrings und/oder des Außengehäuses, z.B. den Bereich zwischen den jeweiligen Schwenkbereichen, heizen. Insbesondere wenn die Heizschicht eine beispielhafte Ausführungsform in Form eines Ringes oder Bandes unter der Oberfläche des Innenrings und/oder des Außengehäuses hat. Das hat den Vorteil, dass die Heizschicht in Form eines Ringes Bandes leichter herzustellen und einzubauen ist.

Die Heizschicht kann aus Kohlefaser-Heizelementen oder Kohlenstoffnanoröhrchen-Schichten bestehen, durch die ein elektrischer Strom fließt und so Wärme erzeugt. Die Heizschicht kann elektrische Schnittstellen aufweisen, die eine Verbindung mit einer Strom- beziehungsweise Spannungsquelle ermöglichen. Gemäß einer alternativen Ausführungsform kann die Heizschicht auch ein mit anderen elektrisch leitfähigen Partikeln angereicherter Kunststoff sein, z.B. Kupferpartikel o.ä..

Der Innenring und das Außengehäuse bilden eine Wand eines Strömungskanals des Flugtriebwerks. In dem Strömungskanal werden der Reihe nach der Verdichter, die Brennkammer und die Turbine durchströmt. Die verstellbaren Leitschaufeln können insbesondere verstellbare Verdichterleitschaufeln oder bevorzugt Verstellleitklappen eines Verdichtereinlassgitters oder vor dem Fan angeordneten Eintrittsleitgitters sein.

Die Verstellleitklappen können ein hinterer Teil von Streben des Verdichtereinlassgitters oder Eintrittsleitgitters sein, wobei in diesem Fall vor den Ausnehmungen ein Vorderteil der Streben vorgesehen ist. Der Innenring und das Außengehäuse bilden dabei Wände beispielsweise des Kernströmungskanals, in dem die Leitschaufeln angeordnet sind. Die Aufnahmen können Bohrungen oder Vertiefungen in dem Innenring oder dem Außengehäuse sein. Üblicherweise erfolgt eine Verstellung der Leitschaufeln über einen Antrieb, der außerhalb des Strömungskanals angeordnet ist. In den Aufnahmen sind die Leitschaufeln schwenkbar gelagert. Zwischen dem Schwenkbereich und der Oberfläche des Innenrings beziehungsweise des Außengehäuses bildet sich ein Fahnenspalt, der je nach aktuellem Verstellwinkel der Leitschaufel größer oder kleiner ausgebildet ist.

An, auf, über, unter, oberhalb, unterhalb, zu oberst, zu unterst und ähnliche Lokalpräpositionen in Bezug auf die Heizschicht oder auf den Faserverbund stellen einen entsprechenden Bezug des besagten Elements zu der Oberfläche des Innenrings bzw. des Außengehäuses her, und sollen nicht die absolute Lage in dem Flugtriebwerk beschreiben.

Weitere Vorteile und Merkmale ergeben sich aus der nachfolgenden Beschreibung einiger bevorzugter Ausführungsbeispiele sowie den abhängigen Ansprüchen.

Gemäß eine ersten bevorzugten Ausführungsform kann die Heizschicht in einem heizbaren Faserverbund angeordnet und/oder eingebettet sein. Der heizbare Faserverbund kann aus mehreren Gewebeschichten ausgebildet sein. Der Faserverbund kann z.B. in einem RTM (engl.: "Resin Transfer Molding") oder in einem PrePreg Verfahren hergestellt sein. Der Faserverbund kann integral mit dem Innenring und/oder dem Außengehäuse ausgebildet sein bzw. diesen ausbilden.

Alternativ kann der Innenring und/oder das Außengehäuse aus metallischen Werkstoffen, insbesondere Titan, hergestellt sein.

Gemäß einer vorteilhaften Ausführungsform der Erfindung kann sich die Heizschicht in eine Richtung, insbesondere in Axialrichtung und/oder in Umfangsrichtung, aus dem Schwenkbereich heraus, insbesondere um weniger als 25% eines maximalen Durchmessers des Schwenkbereichs in dieser Richtung, erstrecken, wobei insbesondere die Heizschicht auf den Schwenkbereich beschränkt sein kann. Ist die Heizschicht kleiner als der Schwenkbereich, so können dabei auch negative %-Werte auftreten. Positive %-Werte haben den Vorteil, dass auch in der Nähe des Fahnenspalts kein Eis entstehen kann. Negative %-Werte haben den Vorteil, dass die Heizschicht klein ausgebildet ist, was zu geringeren Herstellungskosten und einer größeren Homogenität des Basisbauteils führen kann.

Gemäß einer weiteren vorteilhaften Ausführungsform der Erfindung kann zumindest in dem Schwenkbereich ein Einlaufbelag angeordnet sein, wobei die Heizschicht und/oder der heizbare Faserverbund unter dem Einlaufbelag angeordnet ist oder wobei der Einlaufbelag eine oberste Schicht des Faserverbunds bildet. Der Einlaufbelag dient vorteilhaft dazu, dass die verstellbare Leitschaufel aufgrund der Auslegungsbedingten Toleranzketten nicht in die Isolierung oder in die Heizschicht einlaufen kann und dadurch verhindert wird, dass sowohl das Heizelement im Außengehäuse und/oder Innenring Schaden nehmen. Der Einlauf sollte die Dicke des Einlaufbelags nicht überschreiten.

Gemäß einer bevorzugten Weiterbildung der Erfindung kann vorgesehen sein, dass zwischen einerseits der Oberfläche und/oder dem Einlaufbelag und andererseits der Heizschicht eine elektrisch isolierende erste Schicht angeordnet ist, insbesondere wobei die elektrisch isolierende Schicht direkt auf der Heizschicht angeordnet ist. Durch die elektrisch isolierende Schicht kann vorteilhaft vermieden werden, dass der Strom aus der Heizschicht fließt und somit der Wirkungsgrad der Heizschicht erhöht werden. Die elektrisch isolierende, erste Schicht kann Wärme gut leiten. Dazu kann die erste Schicht einen hohen Wärmeleitkoeffizienten, insbesondere einen Wärmeleitkoeffizienten der bei 20°C größer als 10 W / (m * K) ist, aufweisen.

Gemäß einer weiter bevorzugten Weiterbildung der Erfindung kann der Innenring und/oder das Außengehäuse als ein Faserverbundkörper ausgebildet sein und die Heizschicht, insbesondere der heizbare Faserverbund mit der Heizschicht, kann ein Teil des Faserverbundkörpers sein. Diese Bauweise hat diverse Vorteile. Zum einen ist das Bauteil sehr leicht und gleichzeitig robust. Ferner kann der heizbare Faserverbund mit der Heizschicht in das Bauteil eingebettet sein, so dass keine Spalte an den Rändern des Faserverbunds auftreten.

Gemäß einer besonders bevorzugten Weiterbildung kann auf der Heizschicht und unter der Oberfläche zumindest eine erste Gewebeschicht angeordnet sein, insbesondere wobei die erste Gewebeschicht zwischen der elektrisch isolierenden ersten Schicht und der Oberfläche angeordnet ist. Dadurch wird das Anti-Vereisungssystem voreilhaft weiter stabilisiert und verstärkt.

In einer besonderen Weiterbildung kann auf einer der Oberfläche abgewandten Seite der Heizschicht zumindest eine Grundgewebeschicht angeordnet sein, insbesondere kann die zumindest eine Grundgewebeschicht einen Grundkörper des Innenrings und/oder des Außengehäuses bilden. Mit der Grundgewebeschicht kann vorteilhaft ein zuverlässiger Rahmen für den Faserverbund geschaffen werden. Die Grundgewebeschicht kann sich insbesondere auch seitlich der Heizschicht erstrecken.

Besonders bevorzugt kann zwischen der Grundgewebeschicht und der Heizschicht eine elektrisch und thermisch isolierende Schicht angeordnet ist. Dadurch wird vorteilhaft zum einen der Stromfluss auf die Heizschicht beschränkt und zum anderen die von der Heizschicht erzeugte Wärme in Richtung der Oberfläche geleitet.

Insbesondere wenn der Innenring und/oder das Außengehäuse aus einem metallischen Werkstoff, bevorzugt aus einer Titanbasislegierung, ausgebildet sind, kann in einer Ausführungsform zumindest in dem Schwenkbereich eine Ausnehmung ausgebildet sein, in der die Heizschicht, insbesondere der heizbare Faserverbund mit der Heizschicht, angeordnet sein kann. Dadurch kann auf einfache Weise ein Heizelement in den Innenring und/oder das Außengehäuse integriert sein.

In einer weiteren vorteilhaften Ausführungsform der Erfindung kann vorgesehen sein, dass die Heizschicht, insbesondere der heizbare Faserverbund mit der Heizschicht, durch Befestigungsmittel, insbesondere eine Verschraubung, einen Formschluss und/oder eine Verklebung, in der Ausnehmung befestigt ist. Dadurch kann vorteilhaft sichergestellt werden, dass die Heizschicht, insbesondere der heizbare Faserverbund mit der Heizschicht im Betrieb dauerhaft mit dem Innenring und/oder dem Außengehäuse verbunden bleibt.

Bevorzugt handelt es sich bei dem Elektrisches Anti-Vereisungssystem um verstellbare Leitschaufeln, die beispielsweise als Verstellleitklappen eines Eintrittleitgitters oder verstellbare Leitschaufeln eines Verdichtereinlassgitters ausgebildet sind.

In einer Ausführungsform findet das Anti-Vereisungssystem Flugtriebwerk, beispielsweise einem Wellenleistungstriebwerk oder einem Strahltriebwerk Anwendung. Das Flugtriebwerk wird in einem Luftfahrzeug, insbesondere Hubschrauber oder Flächenflugzeug, verwendet.

Ein weiterer Aspekt der Erfindung betrifft ein Flugtriebwerk mit einem Kernstromkanal, in dem ein wie oben beschriebenes Anti-Vereisungssystem in einem Innenring und/oder Außengehäuse des Kernstromkanals angeordnet ist.

Die Erfindung wird bezüglich der nachfolgenden Zeichnungen anhand einiger bevorzugter Ausführungsbeispiele der Erfindung näher erläutert.
- Fig. 1: zeigt eine schematische Darstellung eines Flugtriebwerks mit zwei Ausführungsbeispielen des erfindungsgemäßen elektrischen Anti-Vereisungssystems
- Fig. 2: zeigt Ausführungsbeispiele eines Innenrings und eines Außengehäuses des erfindungsgemäßen elektrischen Anti-Vereisungssystems
- Fig. 3: zeigt die exemplarische Anordnung eines heizbaren Faserverbunds in dem Innenring beziehungsweise in dem Außengehäuse
- Fig. 4: zeigt ein erstes Ausführungsbeispiel des Schichtsystems des heizbaren Faserverbunds
- Fig. 5: zeigt ein zweites Ausführungsbeispiel des Schichtsystems des heizbaren Faserverbunds
- Fig. 6: zeigt ein Ausführungsbeispiel einer möglichen Befestigung des heizbaren Faserverbunds in dem Innenring beziehungsweise in dem Außengehäuse

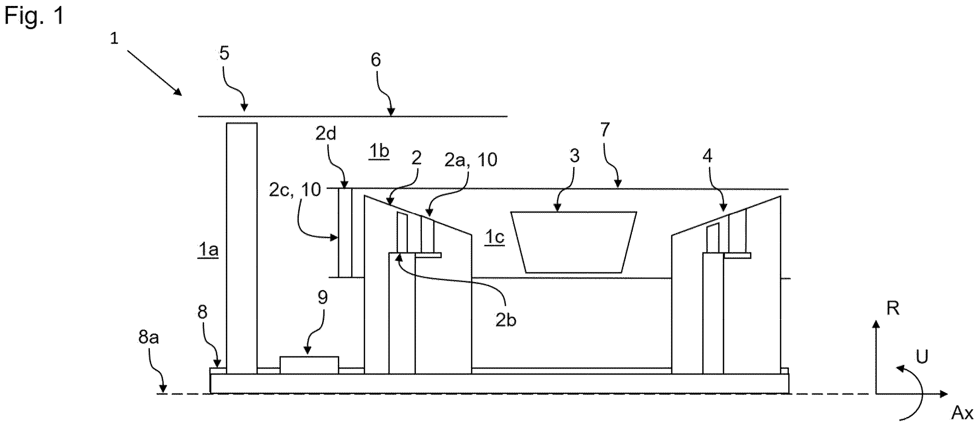

In Fig. 1 ist eine als Flugtriebwerk 1 ausgebildete Gasturbine in einem Meridianschnitt schematisch dargestellt. Das Flugtriebwerk 1 weist einen Triebwerkseinlauf 1a auf, aus dem heraus stromabwärts ein Nebenstromkanal 1b und ein als Kernstromkanal 1c dienender Strömungskanal 1c angeströmt werden. Der Nebenstromkanal 1b dient der Schuberzeugung, der Kernstromkanal 1c dient vorwiegend der Energieerzeugung für die Komponenten des Flugtriebwerks 1 und von Kabinensystemen eines Flugzeugs. In dem Kernstromkanal 1c sind der Reihe nach in Strömungsrichtung die Hauptkomponenten des Flugtriebwerks 1 angeordnet, nämlich ein Verdichter 2, eine Brennkammer 3 und eine Turbine 4. Das Flugtriebwerk 1 weist ein den Triebwerkseinlauf 1a sowie den Nebenstromkanal 1b umgebendes Triebwerksaußengehäuse 6 und ein den Nebenstromkanal 1b und den Kernstromkanal 1c separierendes Zwischengehäuse 7 auf, wobei das Zwischengehäuse 7 als Kernstromaußengehäuse 7 des Kernstromkanal 1c dient. In dem Triebwerkseinlass 1a kann ein Fan 5 mit einer oder mehreren Fanstufen zum Ansaugen und ersten Verdichten von Luft angeordnet sein. Der Fan 5, der Verdichter 2 sowie die Turbine 4 sind mittels zumindest einer um eine Triebwerksdrehachse 8a drehenden Welle 8 mechanisch gekoppelt, wobei der Fan 5 und gegebenenfalls auch (nicht dargestellte) vordere Niederdruckverdichterstufen von der schneller laufenden Turbine 4, insbesondere von einer (nicht dargestellten) Niederdruckturbine, durch ein Getriebe 9 entkoppelt sein können. Ein Teil der von dem Fan 5 angesaugten und verdichteten Luft strömt in den Strömungskanal 1c, wo sie von dem Verdichter 2 stark komprimiert wird, um in der Brennkammer 3 mit Brennstoff vermischt und gezündet zu werden und schließlich in der Turbine 4 zum Antrieb der zumindest einen Welle 8 zu expandieren.

In und an dem Flugtriebwerk 1 kann es insbesondere nachteilig an verstellbaren Leitschaufeln 2b, 2c, insbesondere an den ersten Leitschaufeln 2b des Verdichters 2 oder an Verstellleitklappen 2c an einem Verdichtereinlassgitter 2d, zur Eisbildung kommen. Dementsprechend wird erfindungsgemäß vorgeschlagen, ein Anti-Vereisungssystem 10 für von Eisbildung betroffene verstellbaren Leitschaufeln zu schaffen, wobei das Anti-Vereisungssystem 10 insbesondere bei der Herstellung integral mit einem Grundkörper 28 des Verdichtereinlassgitters 2d, insbesondere eines Innenrings 20a bzw. eines Außengehäuses 20b, verbunden werden kann oder an dem Grundkörper 28, bevorzugt in einer Ausnehmung 29, angeordnet sein kann. Bevorzugt kann der Grundkörper 28 als Teil des Anti-Vereisungssystems 10 hergestellt werden.

Die Triebwerksdrehachse 8a dient als Bezugsachse für die Definition einer parallel zu der Triebwerksdrehachse 8a verlaufenden Axialrichtung Ax, einer dazu senkrecht stehenden Radialrichtung R und einer um die Triebwerksdrehachse 8a verlaufenden Umfangsrichtung U.

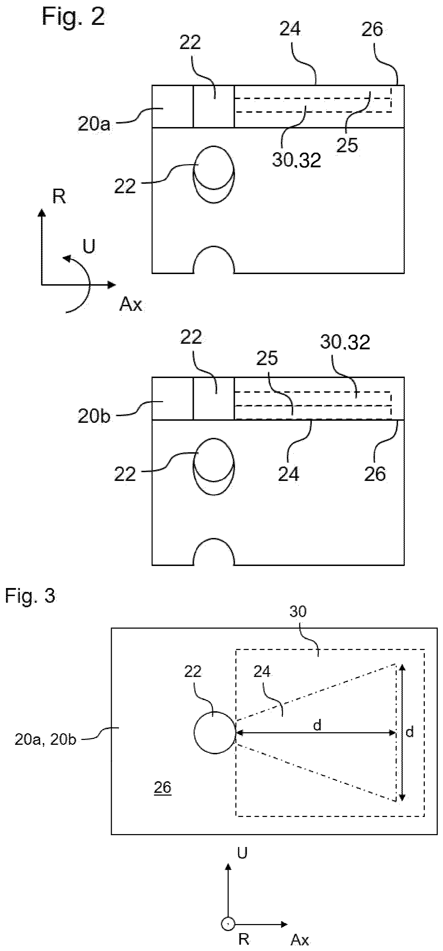

Das Anti-Vereisungssystem 10 wird anhand der folgenden Fig. 2 bis 6 näher beschrieben.

Fig. 2 zeigt in schematischer Darstellung in einem Meridianschnitt oben ein Ausführungsbeispiel eines Innenrings 20a und unten ein Ausführungsbeispiel eines Außengehäuses 20b des Strömungskanals 1c des Flugtriebwerks 1. Die beiden Komponenten 20a, 20b weisen zur Lagerung nicht dargestellter verstellbarer Leitschaufeln jeweils eine Vielzahl von Aufnahmen 22 für jeweils einen Schaufelzapfen einer der Leitschaufeln auf.

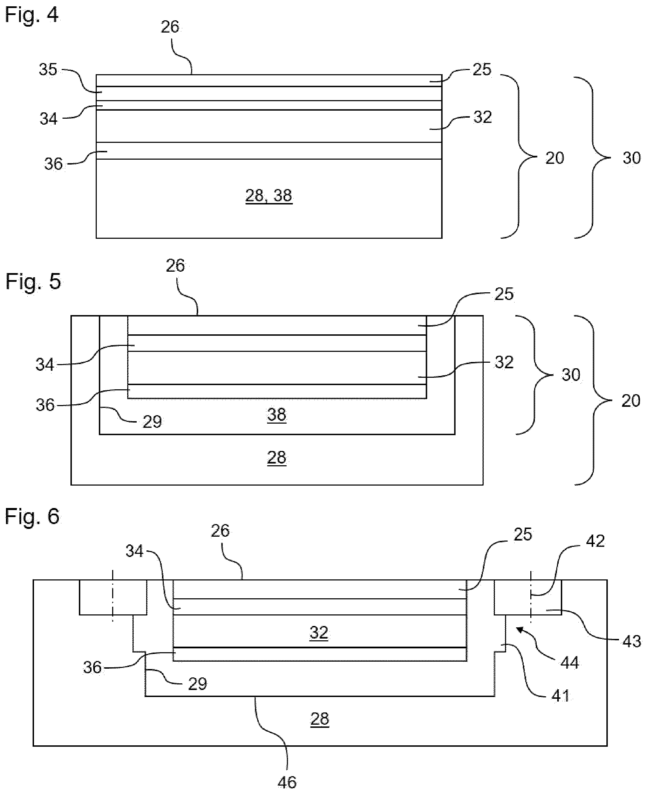

In Axialrichtung Ax befindet sich hinter jeder der Aufnahmen 22 ein im Wesentlichen konusförmiger Schwenkbereich 24 auf einer Oberfläche 26 des Innenrings 20a beziehungsweise des Außengehäuses 20b. Der Schwenkbereich wird von den Dimensionen und dem Schwenkwinkel der Leitschaufeln definiert und ergibt sich aus dem Bereich, in dem die Leitschaufel über die Oberfläche 26 schwenkt. Das heißt, der Schwenkbereich muss nicht zwangsläufig vollständig oder perfekt konusförmig ausgebildet sein, sondern kann aufgrund der Schaufelkrümmung ebenfalls gekrümmte Ränder aufweisen. In diesem Schwenkbereich kann bevorzugt jeweils in dem Innenring 20a bzw. dem Außengehäuse 20b zumindest eine Heizschicht 32 oder ein heizbarer Faserverbund 30 mit einer Heizschicht 32 an oder unter der Oberfläche 26 angeordnet sein. Die Anordnung der Heizschicht 32 in einem heizbaren Faserverbund 30 wird in den Fig. 4 und 5 näher erläutert.

In den vorliegenden Ausführungsbeispielen ist die Heizschicht 32 oder der heizbare Faserverbund 30 unter einer Einlaufschicht 25 angeordnet. Die Einlaufschicht 25 ist unter und an der Oberfläche 26 angeordnet und bildet nach dem Einlaufen der Leitschaufel die Oberfläche des Innenrings 20a bzw. des Außengehäuses 20b. Durch das Einlaufen bildet sich ein möglichst geringer Fahnenspalt. Die Einlaufschicht 25 ist eine optionale Komponente und dient dazu, Fertigungstoleranzen zulassen zu können. Die Oberfläche 26 kann alternativ auch entsprechend genau hergestellt werden.

Fig. 3 zeigt eine Ansicht auf die Oberfläche 26 des Innenrings 20a bzw. des Außengehäuses 20b. Dementsprechend zeigt die Darstellung im Falle eines Innenrings 20a eine Ansicht von radial oben oder außerhalb des Innenrings 20a und im Falle des Außengehäuses 20b eine Ansicht von radial unten oder innerhalb des Außengehäuses 20b.

Man erkennt den im Wesentlichen konusförmigen Schwenkbereich 24 auf der Oberfläche 26, wobei der Schwenkbereich mit Strich-Punktierten-Linien eingezeichnet ist. Der darunter angeordnete heizbare Faserverbund 30 ist mit gestrichelten Linien angedeutet. Der heizbare Faserverbund 30 hat in dem vorliegenden Ausführungsbeispiel eine rechteckige Form, deren Ausläufer sich nicht weiter erstrecken als 25% eines maximalen Durchmessers d des Schwenkbereichs 24 in sowohl der Axialrichtung Ax als auch der Umfangsrichtung U. Es kann vorgesehen sein, dass der heizbare Faserverbund 30 und insbesondere die Heizschicht 32 kleiner ausgebildet sind als der Schwenkbereich 24. Der heizbare Faserverbund 30 kann auch andere als die rechteckige Form aufweisen. Beispielsweise kann der heizbare Faserverbund 30 eine an den Schwenkbereich 24 angepasste Form aufweisen. Der heizbare Faserverbund 30 kann im Wesentlichen konusförmig ausgebildet sein.

Fig. 4 und 5 zeigen den Aufbau des heizbaren Faserverbunds 30 mit der Heizschicht 32. An der Oberfläche 26 ist der Einlaufbelag 25 angeordnet, der bereits Teil des heizbaren Faserverbunds 30 sein kann oder eine zusätzliche, später aufgetragene Schicht ist.

Unterhalb des Einlaufbelags sind der Reihe nach die folgenden Schichten angeordnet: eine erste Gewebeschicht 35, eine elektrisch isolierende erste Schicht 34, eine Heizschicht 32, eine elektrisch und thermisch isolierende zweite Schicht 36 und schließlich eine Grundgewebeschicht 38. Zwischen und innerhalb der genannten Schichten können jeweils weitere Gewebeschichten angeordnet sein, um dem heizbaren Faserverbund 30 weitere Stabilität zu geben. Die erste Gewebeschicht 35 kann eine der Stabilität dienende Gewebeschicht sein. Die erste Schicht 34 dient dazu, die Heizschicht 32 gegenüber der Oberfläche 26 zu isolieren, sollte aber gleichzeitig die Wärme leiten, so dass die Oberfläche 26 gut beheizt werden kann.

In dem Ausführungsbeispiel in Fig. 4 ist der heizbare Faserverbund 30 ein Teil des Innenrings 20a bzw. des Außengehäuses 20b. Der Innenring 20a bzw. das Außengehäuse 20b können ebenfalls aus einem Faserverbundkörper bestehen und weisen einen Grundkörper 28 aus Gewebeschichten auf. Die Gewebeschichten des heizbaren Faserverbundes 30 können sich in diesen Grundkörper 28 erstrecken. Dabei kann das Anti-Vereisungssystem 10 mit dem heizbaren Faserverbund 30 insbesondere zusammen mit dem Grundkörper 28 beispielsweise in einem Resin Transfer Moulding (RTM) Verfahren hergestellt werden. Dadurch ergibt sich vorteilhaft eine integrale Bauweise des elektrischen Anti-Vereisungssystems 10.

In dem Ausführungsbeispiel in Fig. 5 erstreckt sich die Grundgewebeschicht 38 seitlich um die anderen Schichten und bildet somit einen Rahmen der Heizschicht 32 und insbesondere des heizbaren Faserverbunds 30 mit der Heizschicht 32. Die Heizschicht bzw. der heizbare Faserverbund 30 kann in einer in dem Grundkörper 28 ausgebildeten Ausnehmung 29 angeordnet sein. Dieser Aufbau ist insbesondere dazu gedacht, wenn der Innenring 20a bzw. das Außengehäuse 20b aus einem metallischen Werkstoff, wie beispielsweise einer Titanbasislegierung, hergestellt ist, um den Einbau eines Anti-Vereisungssystems 10 mit einem heizbaren Faserverbund 30 in den metallischen Grundkörper 28 zu erleichtern.

In Fig. 6 ist eine Möglichkeit dargestellt, wie der heizbare Faserverbund 30 in dem Grundkörper 28 mit Befestigungsmitteln 40 befestigt werden kann. Befestigungsmittel 40 können eine Verschraubung 42, ein Formschluss 44 und/oder eine Verklebung 46 sein. In dem vorliegenden Ausführungsbeispiel ist daher seitlich an dem heizbaren Faserverbund 30 ein Vorsprung 41 vorgesehen, der einen Formschluss 44 zwischen dem heizbaren Faserverbund 30 und dem Grundkörper 28 ermöglicht. In dem vorliegenden Ausführungsbeispiel ist dazu ein Befestigungsrahmen 43 vorgesehen, der mittels einer Verschraubung 42 an dem Grundkörper 28 befestigt wird und den Vorsprung 41 einspannt.

Ferner kann eine Verklebung 46 genutzt werden, um den heizbaren Faserverbund 30 an dem Grundkörper 28 anzuheften und zu befestigen. Dazu wird ein Adhäsiv zwischen dem heizbaren Faserverbund 30 und dem Grundkörper 28 aufgetragen und ausgehärtet.

Die Befestigungsmittel 40 können auch einzeln oder in anderer Anordnung oder Kombination angeordnet oder vorgesehen sein.

### Bezugszeichenliste

- 1: Flugtriebwerk
- 1a: Einlauf
- 1b: Nebenstromkanal
- 1c: Kernstromkanal
- 2: Verdichter
- 2b: Leitschaufeln
- 2c: Leitschaufeln, Verstellleitklappen
- 2d: Verdichtereinlassgitter
- 3: Brennkammer
- 4: Turbine
- 5: Fan
- 6: Triebwerksaußengehäuse
- 7: Zwischengehäuse
- 8: Welle
- 8a: Triebwerksachse
- 9: Getriebe

- 10: Anti-Vereisungssystem

- 20a: Innenring
- 20b: Außengehäuse
- 22: Aufnahme
- 24: Schwenkbereich
- 25: Einlaufbelag
- 26: Oberfläche
- 28: Grundkörper
- 29: Ausnehmung

- 30: Heizbarer Faserverbund
- 32: Heizschicht
- 34: elektrisch isolierende erste Schicht
- 35: Gewebeschicht
- 36: elektrisch und thermisch isolierende zweite Schicht
- 38: Grundgewebeschicht

- 40: Befestigungsmittel
- 41: Vorsprung
- 42: Verschraubung
- 43: Befestigungsrahmen
- 44: Formschluss
- 46: Verklebung

- Ax: Axialrichtung
- R: Radialrichtung
- U: Umfangsrichtung

## Patentansprüche

1. Elektrisches Anti-Vereisungssystem (10) für verstellbare Leitschaufeln (2b, 2c), insbesondere Verstellleitklappen (2c) eines Eintrittleitgitters oder eines Verdichtereinlassgitters (2d), in einem Flugtriebwerk, umfassend
einen Innenring (20a) und/oder ein Außengehäuse (20b) zur Lagerung der verstellbaren Leitschaufeln (2b, 2c),
wobei der Innenring (20a) und/oder das Außengehäuse (20b) eine Vielzahl von Aufnahmen (22) für jeweils einen Schaufelzapfen einer der Leitschaufeln (2b, 2c) aufweist,
wobei in Axialrichtung (Ax) stromabwärtig der Aufnahmen (22) jeweils ein Schwenkbereich (24) auf einer Oberfläche (26) des Innenrings (20a) und/oder des Außengehäuses (20b) angeordnet ist,
**dadurch gekennzeichnet,**
**dass** zumindest in einem Teil des Schwenkbereichs (24) eine Heizschicht (32) unter der Oberfläche des Innenrings (20a) und/oder des Außengehäuses (20b) angeordnet ist.

2. Elektrisches Anti-Vereisungssystem (10) nach Anspruch 1, **dadurch gekennzeichnet,** die Heizschicht (32) in einem Innenring und/oder Außengehäuse aus Faserverbund (30) und/oder einem metallischen Werkstoff, insbesondere Titan, angeordnet ist.

3. Elektrisches Anti-Vereisungssystem (10) nach Anspruch 1 oder 2, **dadurch gekennzeichnet,**
**dass** die Heizschicht (32) sich in eine Richtung (Ax, U), insbesondere in Axialrichtung (Ax) und/oder in Umfangsrichtung (U), aus den Schwenkbereich (24) hinaus erstreckt.

4. Elektrisches Anti-Vereisungssystem (10) nach einem der vorangehenden Ansprüche, **dadurch gekennzeichnet,**
**dass** zumindest in dem Schwenkbereich (24) ein Einlaufbelag (25) angeordnet ist, wobei die Heizschicht (32) unmittelbar oder mittelbar unter dem Einlaufbelag (25) angeordnet ist oder wobei der Einlaufbelag (25) eine oberste Schicht bzw. die Oberfläche bildet.

5. Elektrisches Anti-Vereisungssystem (10) nach Anspruch4, **dadurch gekennzeichnet,**
**dass** zwischen einerseits der Oberfläche (26) bzw. dem Einlaufbelag (25) und andererseits der Heizschicht (32) eine elektrisch isolierende erste Schicht (34) angeordnet ist, insbesondere wobei die elektrisch isolierende Schicht (34) direkt auf der Heizschicht (32) angeordnet ist.

6. Elektrisches Anti-Vereisungssystem (10) nach einem der vorangehenden Ansprüche, **dadurch gekennzeichnet,**
**dass** auf der Heizschicht (32) und unter der Oberfläche (26) zumindest eine erste Gewebeschicht (35) angeordnet ist, insbesondere wobei die erste Gewebeschicht (35) zwischen der elektrisch isolierenden ersten Schicht (34) und der Oberfläche (26) angeordnet ist.

7. Elektrisches Anti-Vereisungssystem (10) nach einem der vorangehenden Ansprüche, **dadurch gekennzeichnet,**
**dass** auf einer der Oberfläche (26) abgewandten Seite der Heizschicht (32) zumindest eine Grundgewebeschicht (38) angeordnet ist..

8. Elektrisches Anti-Vereisungssystem (10) nach Anspruch 7, **dadurch gekennzeichnet,**
**dass** zwischen der Grundgewebeschicht (38) und der Heizschicht (32) eine elektrisch und thermisch isolierende Schicht (36) angeordnet ist.

9. Elektrisches Anti-Vereisungssystem (10) nach einem der vorangehenden Ansprüche, **dadurch gekennzeichnet,**
**dass** zumindest in dem Schwenkbereich (24) eine Ausnehmung (29) ausgebildet ist, in der die Heizschicht (32) angeordnet ist.

10. Elektrisches Anti-Vereisungssystem (10) nach Anspruch 9, **dadurch gekennzeichnet,**
**dass** die Heizschicht (32) durch Befestigungsmittel (40), insbesondere eine Verschraubung (42), einen Formschluss (44) und/oder eine Verklebung (46), in der Ausnehmung (29) befestigt ist.

11. Elektrisches Anti-Vereisungssystem (10) nach einem der vorherigen Ansprüche, wobei es sich bei den verstellbare Leitschaufeln (2b, 2c) um Verstellleitklappen (2c) eines Eintrittleitgitters oder verstellbare Leitschaufeln eines Verdichtereinlassgitters (2d) handelt.

12. Niederdruckverdichter oder variables Eintrittsleitgitter mit einem elektrischen Anti-Vereisungssystem nach einem der vorherigen Ansprüchen.

13. Flugtriebwerk (1), insbesondere Wellenleistungstriebwerk oder Strahltriebwerk, in dem ein Anti-Vereisungssystem (10) nach einem der vorangehenden Ansprüche in einem Innenring (20a) und/oder Außengehäuse (20b) angeordnet ist.

14. Luftfahrzeug, insbesondere Hubschrauber oder Flächenflugzeug, mit einem Flugtriebwerk nach Anspruch 13.
